Europäisches Patentamt

European Patent Office

Office européen des brevets

(19)

(11) **EP 1 079 636 A1**

## (12) EUROPEAN PATENT APPLICATION

(43) Date of publication:
**28.02.2001 Bulletin 2001/09**

(51) Int. Cl.⁷: **H04N 7/30**, G06T 9/00,
**H04N 7/26**

(21) Application number: **00116467.2**

(22) Date of filing: **29.07.2000**

(84) Designated Contracting States:
**AT BE CH CY DE DK ES FI FR GB GR IE IT LI LU
MC NL PT SE**
Designated Extension States:
**AL LT LV MK RO SI**

(30) Priority: **13.08.1999 FI 991721**

(71) Applicant:
**Nokia Multimedia Terminals Oy
00045 Helsinki (FI)**

(72) Inventor: **Vehviläinen, Markku
33720 Tampere (FI)**

(74) Representative:
**Brax, Matti Juhani et al
Berggren Oy Ab,
P.O. Box 16
00101 Helsinki (FI)**

(54) **Method and arrangement for reducing the volume or rate of an encoded digital video bitstream**

(57)     A method and arrangement are presented for reducing the volume or rate of an encoded digital video bitstream that fulfils a certain set of predefined structural rules. The encoded digital video bitstream is partly decoded (704), thus producing a partly decoded digital video bitstream. The amount of bits in the partly decoded digital video bitstream is reduced (705) by applying an adaptive low-pass filtering function to the weighted and quantized DCT coefficient matrix and the partly decoded digital video bitstream in which the amount of bits is reduced is re-encoded (706). Thus, a re-encoded digital video bitstream is produced, the volume or rate of which is smaller than that of the encoded digital video bitstream, that fulfils the certain set of predefined structural rules.

Fig. 5

EP 1 079 636 A1

**Description**

The invention concerns in general the technological field of processing digital video signals. Especially the invention concerns the technology of reducing the volume or rate of a bitstream that carries an encoded digital video signal. The volume of a bitstream refers generally to the number of bits involved, and the rate of a bitstream refers generally to the number of bits per second which is required to transmit the bitstream between two locations.

The common way of producing a digital representation of an image is to convert the generally continuous image plane into a map of tightly spaced elementary picture units called pixels, and to give each pixel a value or a group of values that represent its color, brightness and/or other visual characteristics. A raw digital video signal is an essentially continuous stream of subsequent still images where the pixels of each image are represented by their digital values. The volume of such a bit stream depends heavily on the applied resolution and tends to be relatively large. Various video compression methods have been presented for encoding the digital video bitstream into a compressed form for easy transportation and storing. In the following we will briefly recapitulate some main features of the known MPEG-2 video compression and decompression method, where the acronym comes from Motion Picture Experts Group.

The main part of MPEG-2 type encoding of a digital image consists of dividing the image into blocks of 8 x 8 pixels, applying a two-dimensional DCT or discrete cosine transform to each block to convert the spatial frequency content of the block into a series of DCT coefficients, weighting and quantizing the DCT coefficients by a certain quantization matrix, applying a VLC or variable length coding scheme to compact the representation of the weighted and quantized DCT coefficients and packetizing the result together with a certain amount of additional information into certain standardized data structures for transportation and/or storing. An MPEG-2 decoder takes the bit stream consisting of such standardized data structures and reconstructs the pixel values of the images by decoding the VLC, dequantizing the groups of DCT coefficients that describe each block and applying an inverse DCT to restore the original spatial frequency content of the block. The decoded digital video signal which is composed from the decoded blocks may then be conducted for example to a displaying apparatus.

A number of modifications to the above-listed block-level operations take place according to whether the block under consideration belongs to an I-picture, a P-picture or a B-picture. Of these an I-picture or intra-coded picture is an independently coded picture which is also decodable without reference to other pictures, a P-picture or predicted picture comprises some references to a former I- or P-picture, and a B-picture or bi-directionally coded picture may refer to either a former or an oncoming I- or B-picture or to both a former and an oncoming I- or B-picture. Here the terms "former" and "oncoming" refer to the displaying order of the pictures and not their transmission order which may be different. I-, P- and B-pictures alternate in the sequence of pictures according to a set of predefined rules.

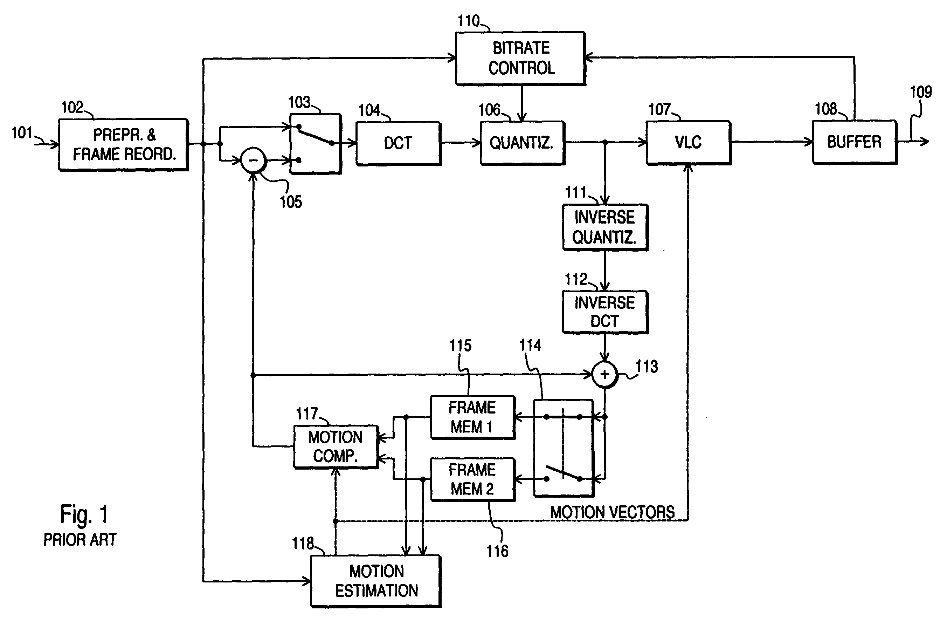

Fig. 1 is a block diagram of a known MPEG-2 encoder. The sequence of picture frames is input at point 101 to a preprocessing and frame reordering block 102 the output of which is coupled through a selection switch 103 to the input of a DCT encoder 104. One of the branches selectable with switch 103 comprises a subtraction unit 105. From the output of the DCT encoder 104 there is a series connection of a quantization block 106, a VLC encoder 107 and a transmission buffer 108 to the output 109 of the whole MPEG-2 encoder. From the output of the preprocessing and frame reordering block 102 and from the transmission buffer 108 there are connections to a bit rate control unit 110, the output of which controls the operation of the quantization block 106. From the output of the quantization block 106 there is also a series connection of an inverse quantization block 111, an inverse DCT block 112 and an addition unit 113 to a double switch 114 which is arranged to couple the output of the addition unit 113 to the input of either a first frame memory 115 or a second frame memory 116. The outputs of the frame memories 115 and 116 are coupled both to a motion compensation block 117 and a motion estimation block. The former provides the other input signal to both the subtraction unit 105 and the addition unit 113. The motion estimation block gets an additional input from the output of the preprocessing and frame reordering block 102, and it provides motion vectors to both the motion compensation block 117 and the VLC encoder 107.

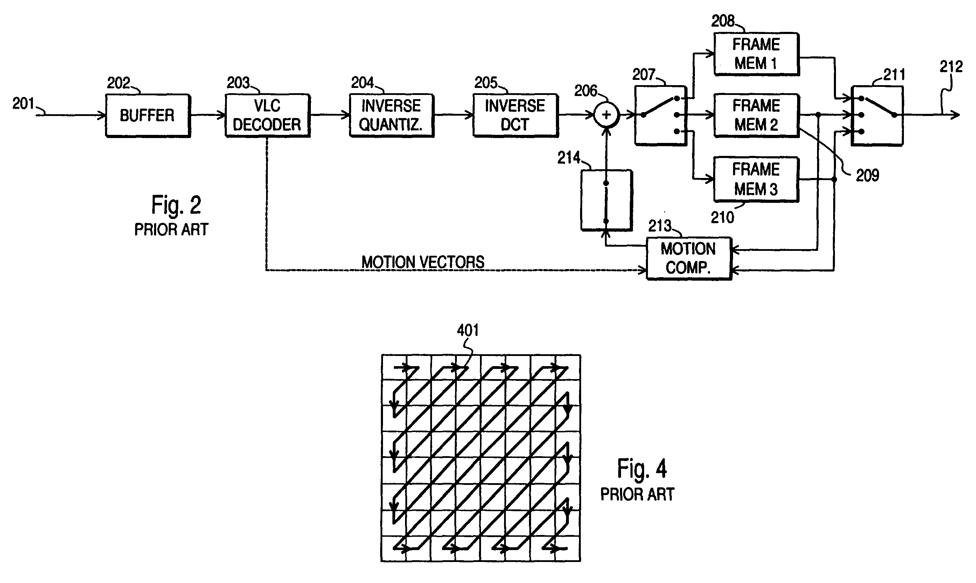

Fig. 2 is a block diagram of a known MPEG-2 decoder. From the input 201 of the decoder there is a series connection of a receiving buffer 202, a VLC decoder 203, an inverse quantization block 204 and an inverse DCT block 205 to the first input of an addition unit 206. A first three-state switch 207 couples the output of the addition unit 206 alternately to one of the first 208, second 209 or third 210 frame memories. A second three-state switch 211 couples alternately the output of one of the first 208, second 209 or third 210 frame memories to the output 212 of the whole decoder. From the VLC decoder 203 there is a connection to a motion compensation block 213 for providing the motion vectors extracted from the received signal. The other inputs to the motion compensation block 213 come from the outputs of the second 209 and third 210 frame memories. The output of the motion compensation block 213 is coupled to the other input of the addition unit 206 through a switch 214.

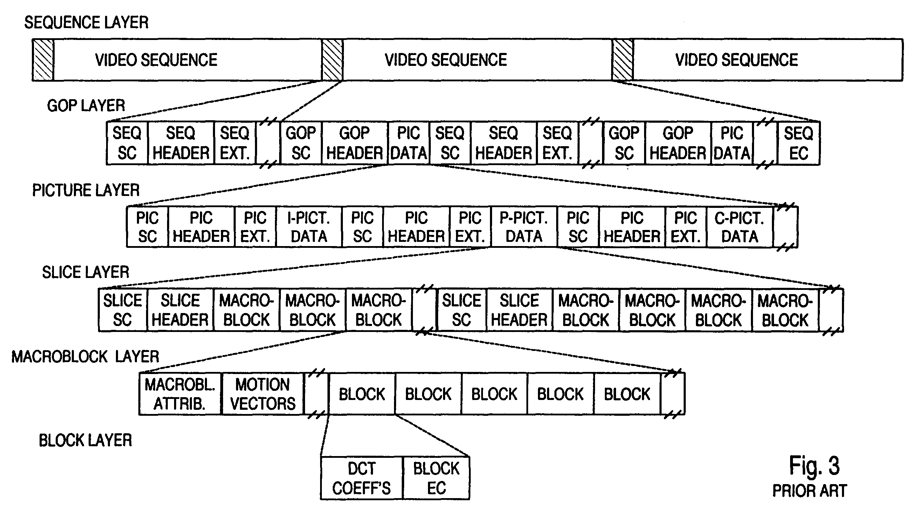

The compressed MPEG-2 video signal produced at the output of the encoder of Fig. 1 is arranged according to a six-layer hierarchy which is illustrated in Fig. 3. The highest level is the sequence layer on which the exemplary signal of Fig. 3 comprises three concatenated video sequences. Each video sequence starts with a header section with a sequence starting code, a sequence header and a sequence extension part. The header section may be repeated at arbitrary parts of the video sequence. The end of the video sequence is marked with a sequence end code.

The second highest level is the GOP or group of pictures level, where a GOP typically contains exactly one I-picture and an arbitrary number of P- and B-pictures. Within the video sequence each GOP starts with a GOP starting code and a GOP header, which are followed by the picture data portion of the GOP. On the picture layer we see that within the picture data portion of the GOP each picture starts with a picture starting code and a picture header with an additional extension part. These are followed by the actual picture data. It should be noted that while only one P-picture and one B-picture are explicitly shown on the picture layer of Fig. 3, typical GOPs may comprise 1 to 4 P-pictures and 1 to 10 B-pictures.

On the slice layer the actual picture data is seen to consist of a multiple of slices. Each slice begins with a slice starting code and a slice header, which are followed by at least one macroblock. On the macroblock layer the macroblock is seen to consist of a set of macroblock attributes, a set of motion vectors and a group of blocks. The number of blocks in each macroblock is fixed so that there are four luminance blocks, one U chrominance block and one V chrominance block. The chrominance resolution is half of the luminance resolution in both horizontal and vertical directions which means that the spatial coverage of the U and V chrominance blocks in the macroblock is the same as the combined spatial coverage of the four luminance blocks. On the block layer each block is seen to consist of the DCT coefficients of the block followed by a block end code.

Let us examine some phases of the generation of the signal shown in Fig. 3 by the encoder of Fig. 1 in more detail. The DCT encoder 104 takes one block of 8 x 8 pixels at a time and calculates a two-dimensional discrete cosine transform which results in 64 coefficients that describe the spatial frequency content of the block. One of the coefficients (the first one in the common mathematical representation) is the so-called DC coefficient which is proportional to the average value of the pixels of the block. The rest of the coefficients are known as the AC coefficients. It is conventional to represent the coefficients in a 8 x 8 matrix form where the DC coefficient is in the upper left corner. The AC coefficients are located in the matrix so that the distance of each coefficient from the upper left corner is proportional to the frequency represented by that coefficient: the most distant coefficients represent the highest spatial frequencies. Additionally the direction of a fictitious line drawn between the location of the coefficient and the upper left corner coincides with the direction the spatial frequency into which the coefficient represents.

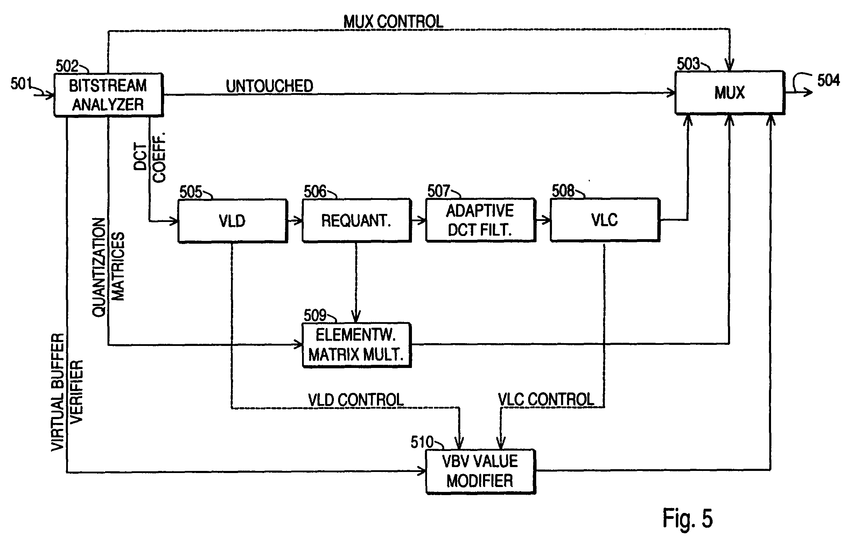

The 8 x 8 matrix of DCT coefficients for each block is not transmitted as such, but in a weighted, quantized and variable length coded (VLC) form. Weighting means that each element in the DCT coefficient matrix is divided by the corresponding element in a 8 x 8 weighting matrix. Quantization and VLC encoding may then be understood as rounding each quotient into the nearest integer and providing a codeword representation for the results: each rounded quotient is mapped into a codeword that unequivocally indicates both the value of the rounded quotient and the number of eventually occurring zeroes between that quotient and the previous non-zero quotient when the quotients are read from the 8 x 8 matrix in the predefined zigzag form illustrated by line 401 in Fig. 4. The coding of runs of subsequent constant values into code words instead of transmitting the values explicitly is also known as run length encoding.

The natural form of the quantization matrix is such that its elements tend to have the larger values the farther they are from the upper left corner. As a result, in most weighted coefficient matrices there is a certain last non-zero quotient after which the rest of the quotients (when read in said zigzag form) are so small that rounding them into the nearest integer produces all zeros. The relative amount of pictorial activity in the pictures to be encoded may be counterbalanced by selecting a suitable weighting matrix: when the values of the elements in the weighting matrix increases steeply, the relative size of the all zeros part of the weighted and quantized coefficient matrix increases, which together with the run-length encoding mentioned above means less bits produced per block. Naturally the weighting and quantization operation causes loss of pictorial information, so from the viewpoint of reproducable picture quality it is advantageous to keep the "zeroing" effect of weighting and quantization as low as possible as long as the volume or rate of the produced bit stream is within predefined limits. The weighting matrices can be different for each picture, meaning that each picture header part seen on the picture layer of Fig. 3 may contain a new quantization matrix (actually the allowed quantization matrices are linear multiples of each other, so the picture header only needs to contain a multiplier that is used to obtain the currently valid quantization matrix from a certain predefined default matrix).

The MPEG-2 specifications introduce a so-called Virtual Buffer Verifier or VBV mechanism to control the rate of producing an encoded bitstream. The aim of the VBV is to ensure that it will be possible to decode the encoded bitstream with a decoder that has an input buffer of a certain fixed size. A virtual buffer is a hypothetical first-in-first-out buffer memory which is thought to be directly connected to the output of the encoder. The size of the virtual buffer in bits is declared in the sequence header. At the beginning of encoding a video sequence the virtual buffer is "filled" to a certain fullness which is specified in the bitstream. Thereafter the buffer occupancy is inspected after each picture interval before and after removing from the buffer the bits belonging to the picture which has been in the buffer longest. Both before and after the removal of bits the number of bits in the buffer must remain between zero and B, where B is the size of the virtual buffer in bits. The larger the size of the virtual buffer, the more the number of bits produced by encoding an individual picture is allowed to deviate from the average. If the inspection of the virtual buffer occupancy shows an underflow, the encoded picture which was removed from the virtual buffer consumed too many bits: more compression must be introduced by using a steeper weighting matrix. An observed virtual buffer overflow shows that volume of the bit stream is about to fall below its defined minimum limit, which is corrected by adding stuffing bits to the bitstream.

The problem which the present invention aims to overcome is that once the bitstream that carries an encoded digital video signal has been produced by the encoder, its volume or rate is constant. A certain predefined transmission capacity is required for transmitting it between two locations, and a certain predefined storage capacity is required to store e.g. the complete video sequence onto a storage medium for later use. It would be advantageous if a user or other party taking part in the transmission, storage or use of the bitstream could adapt the volume or rate of the bitstream to the available transmission or storage capacity.

Various known video filtering techniques can be used for simplifying a picture: for example it is possible to repeatedly take a number of adjacent pixels and replace them with a smaller number of adjacent pixels the values of which are obtained from the values of the original pixels through a certain averaging scheme. Reducing the total number of pixels in each picture naturally reduces the volume or rate of the bitstream which is composed of the pictures. Another approach is to limit the number of bits which are available to indicate the value(s) associated with each pixel, resulting in a reduced number of different tones in the picture. However, all such video filtering techniques where the filtering takes place on the pixel level require that the encoded digital video signal is completely decoded, i.e. the original pictures are restored before the filtering is possible, and re-encoded after the filtering. Decoding and re-encoding the bitstream completely just for reducing its volume or rate requires a considerable amount of time and other resources.

One could propose an alternative approach for reducing the volume or rate of a bitstream where complete pictures would be cut out from the encoded bitstream without otherwise decoding it. In order not to change the displaying rate the removed pictures should be replaced with some kind of codes that instruct the displaying apparatus to echo the previous picture instead or to otherwise fill the gap in the picture sequence. The drawback of this approach is that the addition of such codes to an already applied standard is very difficult: only new or newly reprogrammed display apparatuses would understand the codes correctly. Additionally the removal of pictures tends to cause twitching in the displayed video image.

It is an object of the present invention to provide a method and an arrangement for reducing the volume or rate of an encoded digital video signal. Especially it is an object of the invention to accomplish the volume or rate reduction essentially without requiring changes to the existing coding standards. It is a further object of the invention to provide such a method and arrangement so that the implementation is simple and advantageous from the manufacturing point of view. An additional object of the invention is that the method and arrangement should be easily integrated into various existing and future signal processing arrangements.

The objects of the invention are achieved by partly decoding the encoded digital video signal, applying low pass filtering and/or rescaling to the partly decoded signal and reencoding the result into the fully encoded form.

The method according to the invention comprises the characteristic steps of

- partly decoding an encoded digital video bitstream, thus producing a partly decoded digital video bitstream,
- reducing the amount of bits in the partly decoded digital video bitstream and
- re-encoding the partly decoded digital video bitstream in which the amount of bits is reduced, thus producing a re-encoded digital video bitstream, the volume or rate of which is smaller than that of the encoded digital video bitstream, that fulfils a certain set of predefined structural rules.

The invention also applies to an arrangement which comprises as its characteristic features

- means for partly decoding an encoded digital video bitstream,
- means for reducing the amount of bits in the partly decoded digital video bitstream and
- means for re-encoding the partly decoded digital video bitstream in which the amount of bits is reduced.

The invention is based on the insight that an encoded digital video signal does not need to be decoded completely to reach a level where it is possible to produce even very large variations to the volume or rate of the bitstream without making fundamental changes to its basic structure. According to the invention the bitstream is post-processed in a form which is somewhere between a fully encoded and fully decoded form. The level on which the post-processing is accomplished, and the part(s) of the bitstream that are the subjected to it are selected so that the adverse effects introduced by the volume or rate reduction on the observable quality of the signal are kept under control. The post-processing can be made adaptive by selecting its transfer function according to certain predefined characteristics of the signal.

Within the MPEG-2 framework the suitable level on which the invention is applied is the level of DCT coefficients and their quantization. In the research which led to the invention it was found that simply rescaling the DCT coefficients is not advantageous because even a relatively moderate level of rescaling tends to make the block boundaries visible in the reproduced picture. However, low pass filtering the DCT coefficients, i.e. changing the relative magnitudes of the spatial frequency components within a block with an emphasis on lower frequencies, potentially combined with rescaling, was found to produce excellent results. To achieve the low pass filtering the weighted, quantized and VLC encoded coefficient matrices contained in the original MPEG-2 bitstream are subjected to VLC decoding, after which the step(s) of (rescaling and) filtering are performed and the results are again VLC encoded. These operations are complemented by a number of supporting steps which ensure that after the (rescaling and), low pass filtering and VLC re-encoding the MPEG-2 bitstream with reduced volume or rate can be reconstructed without violating the general rules governing the MPEG-2 format.

The selection of frequency response for the low pass filter may be done by several alternative strategies. It has been found advantageous to use an adaptive filter the frequency response of which is matched to the energy content of the picture blocks either on block by block basis or by using some other methods of energy content analysis. Most advantageously the analysis of the block energy content takes separately into account the energy associated with the different spatial frequency directions, like horizontal, vertical and diagonal.

The novel features which are considered as characteristic of the invention are set forth in particular in the appended Claims. The invention itself, however, both as to its construction and its method of operation, together with additional objects and advantages thereof, will be best understood from the following description of specific embodiments when read in connection with the accompanying drawings.

Fig. 1 illustrates a known MPEG-2 encoder,

Fig. 2 illustrates a known MPEG-2 decoder,

Fig. 3 illustrates the known hierarchical structure of an MPEG-2 formatted bitstream,

Fig. 4 illustrates the known zigzag reading order of DCT coefficients,

Fig. 5 is a block diagram of an advantageous embodiment of the invention,

Fig. 6a illustrates a certain filtering function,

Fig. 6b illustrates a certain definition of directionality of DCT coefficients an

Fig. 7 illustrates the compression principle of the invention.

Figs. 1 to 4 have been described above in connection with prior art, so the following discussion will concentrate on Figs. 5, 6a, 6b and 7.

Fig. 5 is a block diagram of an apparatus which can be used to reduce the volume or rate of an MPEG-2 encoded bitstream which appears at the input line 501. A bit stream analyzer block 502 is coupled to the input 501. It has four data outputs which are known as the "untouched" output, "DCT coefficients" output, "quantization matrices" output and the "virtual buffer verifier" output. Additionally the bit stream analyzer block 502 has a control output. At the right in Fig. 5 there is a multiplexer block 503 which has four data inputs, one control input and one output of which the latter is coupled to the output line 504 of the whole apparatus. The data inputs of the multiplexer block 503 have the same names as the data outputs of the bit stream analyzer block 502.

The control output of the bit stream analyzer block 502 is directly coupled to the control input of the multiplexer block 503 and the "untouched" output of the bit stream analyzer block 502 is directly coupled to the corresponding input of the multiplexer block 503. Between the "DCT coefficients" output of the bit stream analyzer block 502 and the corresponding input of the multiplexer block 503 there is the series connection of a variable length decoder 505, a requantization block 506, an adaptive DCT filtering block 507 and a variable length re-encoder block 508. Between the "quantization matrices" output of the bit stream analyzer block 502 and the corresponding input of the multiplexer block 503 there is an element-wise matrix multiplier block 509 and between the "virtual buffer verifier" output of the bit stream analyzer block 502 and the corresponding input of the multiplexer block 503 there is a VBV value modifier block 510. Between the requantization block 506 and the element-wise matrix multiplier block 509 there is a control connection. Similarly there are control connections from the variable length decoder 505 and re-encoder block 508 to the VBV value modifier block 510.

The arrangement of Fig. 5 operates according to the following description.

The bit stream analyzer block 502 performs a demultiplexing function where the VBV values and other virtual buffer related information are directed to the VBV value modifier block 510, the weighting (quantization) matrices are directed to the element-wise matrix multiplier block 509, the DCT coefficient matrices are directed to the variable length decoder 505 and the rest of the bitstream is directed through the "untouched" output to the corresponding input of the multiplexer block 503.

The variable length decoder 505 decodes the VLC encoded DCT coefficient matrices and feeds them into the requantization block 506, which applies a requantization function the aim of which is to enlarge the quantization step used in the original encoding process.

According to an advantageous embodiment of the invention the requantization is a simple division, also known as rescaling, where all DCT coefficients of each coefficient matrix are divided by a certain parameter which may be designated as $\alpha$. For a certain reason given below the value of $\alpha$ must remain constant through all blocks for which the same weighting matrix has been used in the original encoding. The most advantageous value for the parameter $\alpha$ depends on the amount of reduction which must be achieved in the volume or rate of the bitstream. The higher the value of $\alpha$, the closer the requantized DCT coefficients tend to get to zero, which means more compression in the bitstream. The other way round, the closer the value of a is to one, the less compression is obtained through requantization. It has been shown that requantization easily introduces perceptible artifacts into the pictures (e.g. the block boundaries tend to become visible) which means that depending heavily on requantization to reduce the volume or rate of the bitstream is not advantageous. Suitable values for $\alpha$ may be found by experimenting. The invention does not require the use of requantization at all, i.e. the value of $\alpha$ may well be 1.

The requantized DCT coefficient matrices are directed to the DCT filtering block 507, which applies a certain transfer function which is most advantageously of the low-pass type: the DCT coefficients which represent the lowest spatial frequencies are preserved while the DCT coefficients which represent the higher spatial frequencies are reduced in value or even zeroed. The recommendation of a generally low-pass type filtering strategy follows from the observation that it is the higher spatial frequencies that give rise to the blocking artifact referred to above. The invention does not limit the actual form of the transfer function. We will describe some potential transfer functions in more detail.

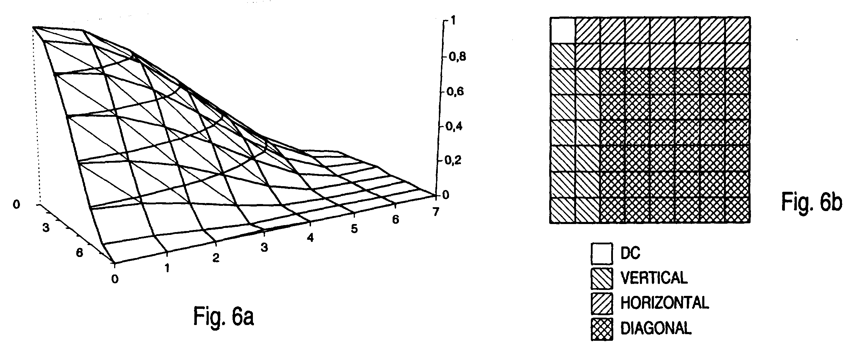

To make it easier to understand the filtering we may use a geometrical model in which the transfer function is first defined as a certain two-dimensional curve between the ordinate values from 0 to 7 and converted into a three-dimensional surface by rotating it around the vertical coordinate axis by 90 degrees. Fig. 6a illustrates a surface produced by rotating the known gaussian curve, known also as the (1 2 1) low-pass filter response, fitted into the range from 0 to 7 around the vertical axis. Filtering with this transfer function means that the 8 x 8 integral intersection points on the horizontal plane are considered and the corresponding values on the surface are taken as the multipliers that are used to multiply the 8 x 8 DCT coefficients in the DCT coefficient matrix. Table I shows the multipliers in tabular form.

Table I

| | | | | | | | |
|------|------|------|------|------|------|------|------|
| 1 | 0,95 | 0,81 | 0,61 | 0,39 | 0,19 | 0,05 | 0 |
| 0,95 | 0,9 | 0,77 | 0,57 | 0,36 | 0,17 | 0,04 | 0 |
| 0,81 | 0,77 | 0,65 | 0,47 | 0,29 | 0,12 | 0,02 | 0 |
| 0,61 | 0,57 | 0,47 | 0,33 | 0,19 | 0,06 | 0 | 0,01 |
| 0,39 | 0,36 | 0,29 | 0,19 | 0,08 | 0,01 | 0 | 0 |
| 0,19 | 0,17 | 0,12 | 0,06 | 0,01 | 0 | 0 | 0 |
| 0,05 | 0,04 | 0,02 | 0 | 0 | 0 | 0 | 0 |
| 0 | 0 | 0 | 0,01 | 0 | 0 | 0 | 0 |

Another possible transfer function could be obtained by rotating a step function with a step from 1 to 0 at some point X (so that 0 < X < 7) around the vertical axis. This would result in a "top hat" surface with the value 1 for all ordinate points which are closer than X to the origin and the value 0 for all other ordinate points. Still another proposed transfer function could be obtained by rotating a straight descending line around the vertical axis, resulting in a conical transfer function surface with an upwards pointing vertex at the vertical axis. In practice it has been noted that using either a "top hat" transfer function or a conical one tends to introduce ghost lines and ripple into the picture. It is not required that the transfer function should possess any cylindrical symmetry, i.e. the "filter surface" need not be obtained through rotating a two-dimensional curve around the vertical axis.

The form of the transfer function applied in the DCT filtering block 507 to low pass filter the spatial frequency components of the blocks is of primary importance regarding the amount of reduction achieved in the volume or rate of the bitstream through the use of the invention. In the following we consider exclusively transfer functions of the rotationally obtained gaussian type, although the following discussion is also applicable to arbitrary transfer functions. The two-dimensional gaussian curve which is used to define the filter surface may be scaled in the horizontal direction: squeezing it closer to the origin means that the point where the curve begins to give negligibly small values is associated already with a relatively small ordinate value, whereas stretching it away from the origin means that the values given by the curve remain substantially greater than zero even for relatively large ordinate values. The effect of the squeezing or stretching of the two-dimensional curve on the rotationally obtained filtering surface are easily understood: the "hill" around the vertical axis becomes either steeper (squeezing) or smoother (stretching).

Because the DCT coefficients to be filtered are conceptually associated with certain points on the ordinate plane, scaling is easily modelled by mapping each of said points consistently to another point on the ordinate plane before reading the corresponding filtering factor from the filtering surface. For each point the mapping takes place along a line which goes through both the original point and the origin: squeezing means mapping the point farther away from the origin and stretching means mapping it closer to the origin. It is clear that squeezing is synonymous to applying a tighter low pass function (leaving only relatively few lowest spatial frequencies and canceling all others) and stretching means that the low pass function is loosened to pass even some of the higher spatial frequencies through in substantial magnitude.

The "squeezing" or "stretching" of the filter surface is more generally known as adapting the filtering function. According to the MPEG-2 embodiment of the invention the filtering function is adapted enough to - together with the eventual effect of the rescaling described above - achieve the required reduction in the volume or rate of the bitstream. The required degree of adaptation, i.e. the amount by which the filter surface is squeezed or stretched to achieve a certain predefined reduction in volume or rate, may be preprogrammed to a look-up table which the DCT filtering block 507 consults after the apparatus of Fig. 5 has received a command to perform a bitstream volume or rate reduction operation from a certain given input volume or rate to a certain given output volume or rate, or the DCT filtering block may obtain it dynamically by starting with a certain preprogrammed default filtering function and using a feedback loop to change the amount of adaptation if the obtained output volume or rate is too high or too low.

Up to this point we have described the use of the same filtering function to all DCT coefficients in a coefficient matrix. The invention does not contain such a limitation. Indeed, it has been found that by applying a differently adapted filtering function to horizontally, vertically and diagonally directed spatial frequencies it is possible to obtain very advantageous results. Fig. 6b illustrates an exemplary division of the DCT coefficients to those relating to horizontally, vertically and diagonally directed spatial frequencies. Also other kinds of definitions are possible, as is the use of a larger or smaller number of directional groups.

Taken that a grouping into horizontally, vertically and diagonally directed spatial frequencies is defined, it is advantageous to define the scaling factor for the filtering function separately for each group. A simple way of defining the scaling factor is to take the DCT coefficient that represents the highest signal energy within the group, and examine its position within the DCT coefficient matrix. The position may be represented with a variable P. If we are considering the group of horizontally directed spatial frequencies, let P take the horizontal index value of the examined DCT coefficient. In other words, if within the group of horizontally directed spatial frequencies the highest signal energy is represented by the coefficient the location of which in the DCT coefficient matrix is ($i1$, $j1$), let P have the value $j1$ when the filtering of the horizontally directed spatial frequencies is considered.

Similarly, if within the group of vertically directed spatial frequencies the highest signal energy is represented by the coefficient the location of which in the DCT coefficient matrix is ($i2$, $j2$), let P have the value $i2$ when the filtering of the vertically directed spatial frequencies is considered. If within the group of diagonally directed spatial frequencies the highest signal energy is represented by the coefficient the location of which in the DCT coefficient matrix is ($i3$, $j3$), let P have the greater of the values $i3$ and $j3$ when the filtering of the diagonally directed spatial frequencies is considered.

When the value for the variable P has been found within a group of spatial frequencies directed to a certain direction, an advantageous way of calculating the scaling factor for the filtering function regarding that group of spatial frequencies is to divide the value of P by a certain number which may be constant or which may be obtained from a look-up table relating to a required compression ratio as described above. The divisor used to divide the value of P may also be dynamically adapted by using feedback that describes the relation between the obtained and required compression ratio. For the adaptive filtering to be effective it is advantageous to select the divisor so that relatively high values of P cause stretching and relatively low values of P cause squeezing to the filtering function.

Other advantageous ways of finding the correct adaptation to the filtering function associated to a certain group of spatial frequencies directed to a certain direction are the calculations of the variance $s^2$ or mean absolute error $s$ of signal frequencies represented by the DCT coefficients belonging to the group. The variance $s^2$ is calculated according to the formula

$$s^2 = \frac{1}{n\text{-}1} \sum_{i,j} [DCT(i,j) - \bar{x}]^2$$

and the mean absolute error *s* is calculated according to the formula

$$s = \frac{1}{n}\sum_{i,j} |DCT(i,j) - \bar{x}|$$

where *n* is the number of DCT coefficients in the group, $DCT(i,j)$ is the DCT coefficient at location $(i, j)$ within the DCT coefficient matrix, $\bar{x}$ is the mean value of the DCT coefficients in the group and the summing over *i* and *j* extends through the group. The variance or mean absolute error may be used as such as the scaling factor for the filtering function associated with that group, or it may be divided or multiplied by a number which is defined similarly as the divisor of the value P described above.

Let us complement the description of the adaptive filtering function with an example. We consider the filtering function which is used to filter the group of horizontally directed spatial frequencies (with the group defined as in Fig. 6b) first in a case where the block to be filtered is found to contain high horizontal activity and then in a case where the block to be filtered is found to contain low horizontal activity. Table II shows the two top rows of the original filtering matrix which is used to describe the filter surface in the actual filtering operation. These are the same as the two top rows of Table I above.

Table II

| 1 | 0,95 | 0,81 | 0,61 | 0,39 | 0,19 | 0,05 | 0 |
|---|------|------|------|------|------|------|---|
| 0,95 | 0,9 | 0,77 | 0,57 | 0,36 | 0,17 | 0,04 | 0 |

Note that the leftmost column does not affect the filtering of horizontally directed spatial frequency components, since the top value there corresponds to the DC coefficient and the lower value corresponds to the topmost coefficient the vertical group. Let as assume that in a block where high horizontal activity is found the largest coefficient is at a horizontal location 6, which becomes the value of P. This is a relatively large value of P, so stretching is caused. The resulting top rows of the modified filtering matrix may look like Table III.

Table III

| 1 | 0,97 | 0,95 | 0,88 | 0,81 | 0,71 | 0,61 | 0,50 |
|---|------|------|------|------|------|------|------|
| 0,96 | 0,93 | 0,90 | 0,84 | 0,77 | 0,67 | 0,58 | 0,47 |

Let us then make an alternative assumption according to which the block to be filtered comprises only low horizontal activity: within the group of horizontal spatial frequencies the largest coefficient is at a horizontal location 1. This is a relatively small value of P, so squeezing is caused. The resulting top rows of the modified filtering matrix may look like Table IV.

Table IV

| 1 | 0,61 | 0,05 | 0 | 0 | 0 | 0 | 0 |
|---|------|------|---|---|---|---|---|
| 0,61 | 0,58 | 0,04 | 0 | 0 | 0 | 0 | 0 |

As an alternative to the groupwise adaptation we may present a simpler embodiment of the invention in which the whole DCT coefficient matrix is treated as a single group where the largest coefficient value is found at location $(i4, j4)$. The value of P is selected as the greater of the indices *i4* and *j4* when the filtering of all spatial frequencies is considered.

After each group of frequencies has been filtered with the transfer function the adaptation of which has been separately calculated for each group (or with the same transfer function for all, if the separately adapted transfer functions are not used), the filtered DCT coefficient matrix is produced by inserting into an 8 x 8 matrix all the DCT coefficients obtained through elementwise multiplication between the original (eventually requantized) DCT coefficients and the corresponding elements in the filtering matrix.

The filtered DCT coefficient matrices are directed to the variable length re-encoder block 508 which re-encodes them preferably according to exactly the same method which is employed in the known MPEG-2 encoders.

The re-encoded result comprises less bits than the stream of original VLC encoded DCT coefficient matrices fed into the variable length decoder 505, because the filtering function of block 507 has produced longer runs of zeroes in the matrices.

It should be noted that the invention does not require the requantization block 506 and the DCT filtering block 507 to be located in this order. In other words, in an alternative embodiment of the invention the output of the VLC decoder block 505 is coupled to the input of the variable length re-encoder block 508 through a DCT filtering block and a requantization block in this order.

We will now move on to describe the role of the element-wise matrix multiplier block 509 which is located between the "quantization matrices" output of the bit stream analyzer block 502 and the corresponding input of the multiplexer block 503. Previously we have stated that the value of $\alpha$ used in the requantization block 506 to requantize the DCT coefficients must remain constant through all blocks for which the same weighting matrix has been used in the original encoding. The reason for this is that the overall tone level reducing effect of the requantization must be compensated for by multiplying the corresponding weighting matrix by the same factor which was used to divide the DCT coefficients in the requantization. Therefore the bit stream analyzer 502 takes the information related to the weighting matrices from the original bitstream the volume or rate of which should be reduced, and runs it through the element-wise matrix multiplier block 509. The latter gets from the requantization block 506 the value of $\alpha$ which was used in the requantization, and modifies the weighting matrix information accordingly: if the weighting matrix coefficients are transmitted as such in the picture header, the element-wise matrix multiplier block 509 multiplies them with the obtained value of $\alpha$. If the allowed quantization matrices are linear multiples of each other and the picture header only contains a multiplier that is used to obtain the currently valid quantization matrix from a certain predefined default matrix, the element-wise matrix multiplier block 509 multiplies the multiplier with the obtained value of $\alpha$.

Next we will briefly discuss the operation of the VBV value modifier block 510. Its task is simply to ensure that the VBV values in the modified bitstream are in accordance with the VBV specifications known from the MPEG-2 standards. The VBV value modifier block 510 gets control information both from the VLC decoder block 505 and the variable length re-encoder block 508 so that it is aware of the exact amount of reduction achieved in the volume or rate of the bitstream. It modifies the VBV values obtained from the bitstream analyzer 502 so that the reduction in the amount of bits associated with each block is correctly reflected by the modified VBV values.

We will conclude Fig. 5's operational description by briefly describing the operation of the multiplexer block 503. Its task is to reconstruct the bitstream from the components it receives from the bitstream analyzer 502, the variable length re-encoder block 508, the element-wise matrix multiplier block 509 and the VBV value modifier block 510. It receives from the bitstream analyzer 502 the necessary syncronization information with which it is able to reconstruct the bitstream so that the various delays caused by the processing operations in blocks 505 to 510 do not destroy the temporal relations of the bitstream components. Outputting, through the output line 504, the final modified bitstream the volume or rate of which has been reduced may take place in complete synchronization with the reading of the input stream through line 501 (for example, if a reduction of exactly 50% has been achieved, the output clock may be the input clock divided by two), or the input and output may be completely out of synchronization. The latter alternative is probably the most advantageous, because the achieved reduction is seldom an exact fraction of the input volume or rate.

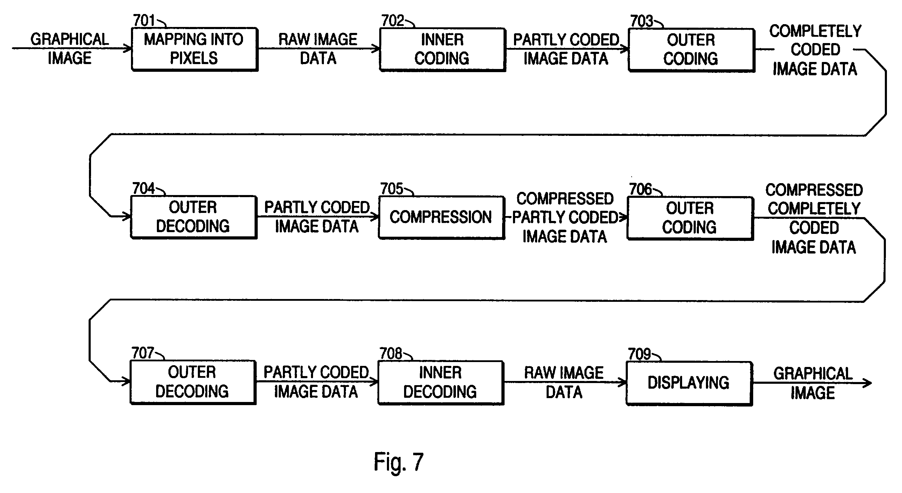

Fig. 7 is a flow diagram that illustrates the principle of compressing an encoded digital video bitstream according to the invention. The top and bottom rows in Fig. 7 are known from prior art, and the invention relates to the middle row. A graphical image is mapped into pixels at step 701 by a digital video camera or a corresponding apparatus. An inner coding 702 is performed, which in the MPEG-2 system corresponds to the DCT encoding phase. After that an outer encoding 703 is performed; in the MPEG-2 system this corresponds to the weighting, quantization and VLC encoding of the DCT coefficient matrices. The compression in accordance with the invention consists of decoding the outer encoding at step 704, compressing the partly encoded image data at step 705 and restoring the outer coding at step 706. After that the compressed, encoded digital video bitstream may be led e.g. to a displaying apparatus where the outer encoding is decoded at step 707, the inner encoding is decoded at step 708 and the raw image data is mapped into pixels on a display screen at 709. Various storing, transmitting and receiving steps as well as encapsulations of the encoded digital video bitstream into transport containers like IP (Internet Protocol) datapackets or ATM (Asynchronous Transfer Mode) cells and decapsulations from them may take place between the steps shown in Fig. 7.

The compression of the encoded digital video bitstream may take place at an arbitrary location between the source of the bitstream and its displaying. An advantageous application of the invention is to compress the encoded digital video bitstreams that are to be transmitted as a part of a video telephone connection or an Internet connection over a cellular radio network. It should be noted that the known and proposed handheld mobile stations through which a cellular video telephone call or a cellular Internet connection would be established invariably comprise a rather small-sized display which is not capable of reproducing a digital video image with the same resolution and fidelity as e.g. a large TV screen or a tabletop computer. Therefore it is in many cases very advantageous to compress an encoded digital video bitstream before transmitting it over the radio interface to such a mobile station, because a remarkable reduction may be achieved in the required amount of radio resources and because the limited displaying capabilities of the mobile station would make it difficult anyway to utilize all the detailed information contained in the original encoded digital video bitstream. The mobile station and the network may even negotiate about the capabilities of the mobile station and the availability of radio resources at the setup phase of a video telephone connection or a cellular Internet connection so that the network will compress the original encoded digital video bitstream to a volume or rate that is both compatible with the mobile station's capability and transmittable over the radio interface.

## Claims

1. A method for reducing the volume or rate of an encoded digital video bitstream that fulfils a certain set of predefined structural rules, **characterized** in that it comprises the steps of

   - partly decoding (704) the encoded digital video bitstream, thus producing a partly decoded digital video bitstream,
   - reducing (705) the amount of bits in the partly decoded digital video bitstream and
   - re-encoding (706) the partly decoded digital video bitstream in which the amount of bits is reduced, thus producing a re-encoded digital video bitstream, the volume or rate of which is smaller than that of the encoded digital video bitstream, that fulfils the certain set of predefined structural rules.

2. A method according to claim 1, **characterized** in that the step of partly decoding the encoded digital video bitstream comprises the sub-steps of

   - separating (502) a number of variable length encoded, weighted and quantized DCT coefficient matrices from an MPEG-2-encoded digital video bitstream and
   - decoding (505) the variable length coding of said variable length encoded, weighted and quantized DCT coefficient matrices, thus producing a number of weighted and quantized DCT coefficient matrices.

3. A method according to claim 2, **characterized** in that the step of reducing the amount of bits in the partly decoded digital video bitstream comprises the sub-step of reducing (506, 507) the number of bits used to represent said weighted and quantized DCT coefficient matrices.

4. A method according to claim 3, **characterized** in that the sub-step of reducing the number of bits used to represent said weighted and quantized DCT coefficient matrices further comprises the sub-step of low-pass filtering (507) a weighted and quantized DCT coefficient matrix with a filter having a certain transfer function.

5. A method according to claim 4, **characterized** in that the sub-step of low-pass filtering said weighted and quantized DCT coefficient matrices further comprises the sub-step of adapting said transfer function according to the contents of a DCT coefficient matrix.

6. A method according to claim 3, **characterized** in that the sub-step of reducing the number of bits used to represent said weighted and quantized DCT coefficient matrices further comprises the sub-steps of

   - defining a number of coefficient groups within a DCT coefficient matrix and
   - low-pass filtering each of said coefficient groups with a filter having a certain transfer function associated with the coefficient group in question.

7. A method according to claim 6, **characterized** in that the sub-step of low-pass filtering each of said coefficient groups further comprises the sub-step of adapting said transfer function according to the contents of the coefficient group in question.

8. A method according to claim 7, **characterized** in that the sub-step of adapting said transfer function according to the contents of the coefficient group in question further comprises the sub-steps of

   - finding the coefficient that represents the highest signal energy within the coefficient group,
   - defining a certain first variable value by referring to the location of said coefficient that represents the highest signal energy within the coefficient group and
   - scaling said transfer function with said first variable value, thus producing a modified transfer function which has a pass band the width of which is the greater the further said coefficient that represents the highest signal energy is in the DCT coefficient matrix from the DC coefficient of that DCT coefficient matrix.

9. A method according to claim 3, **characterized** in that the sub-step of reducing the number of bits used to represent said weighted and quantized DCT coefficient matrices further comprises the sub-step of requantizing (506) a weighted and quantized DCT coefficient matrix by dividing all coefficients contained therein by a certain second variable value.

10. A method according to claim 9, **characterized** in that it further comprises the steps of

- separating (502) from said MPEG-2-encoded digital video bitstream a piece of information describing a weighting matrix which has been used to weight a number of variable length encoded, weighted and quantized DCT coefficient matrices and
- modifying (509) said piece of information describing a weighting matrix, in order to compensate the division of coefficients by a certain second variable value, thus causing a multiplication of said weighting matrix by said second variable value.

11. A method according to claim 3, **characterized** in that the step of re-encoding the partly decoded digital video bitstream comprises the sub-step of variable length coding (508) the DCT coefficient matrices after reducing the number of bits used to represent said DCT coefficient matrices.

12. A method according to claim 2, **characterized** in that in order to complement the step of reducing the amount of bits in the partly decoded digital video bitstream it comprises the sub-steps of

- separating (502) a number of virtual buffer verifier values from said MPEG-2-encoded digital video bitstream and
- modifying (510) said virtual buffer verifier values, thus producing modified virtual buffer verifier values that are in accordance with the re-encoded digital video bitstream the volume or rate of which is smaller than that of the encoded digital video bitstream.

13. An arrangement for reducing the volume or rate of an encoded digital video bitstream that fulfils a certain set of predefined structural rules, **characterized** in that it comprises

- means for partly decoding (502, 505) the encoded digital video bitstream,
- means for reducing (506, 507) the amount of bits in the partly decoded digital video bitstream and
- means for re-encoding (508) the partly decoded digital video bitstream in which the amount of bits is reduced.

14. An arrangement according to claim 13, **characterized** in that it comprises

- a bitstream analyzer (502) arranged to separate a number of variable length encoded, weighted and quantized DCT coefficient matrices from an MPEG-2-encoded digital video bitstream,
- a variable length decoder (505) for decoding the variable length coding of said variable length encoded, weighted and quantized DCT coefficient matrices and
- means for reducing (506, 507) the number of bits used to represent said weighted and quantized DCT coefficient matrices.

15. An arrangement according to claim 14, **characterized** in that said means for reducing the number of bits used to represent said weighted and quantized DCT coefficient matrices comprise a filtering block (507) for filtering the coefficients contained in DCT coefficient matrices.

16. An arrangement according to claim 15, **characterized** in that said filtering block (507) is a low pass filter with a certain transfer function.

17. An arrangement according to claim 16, **characterized** in that said low pass filter (507) has a transfer function which is dependent on the contents of the DCT coefficient matrix which is filtered.

18. An arrangement according to claim 15, **characterized** in that said filtering block (507) is arranged to implement a multitude of different filtering functions upon different coefficient groups within a single DCT coefficient matrix.

19. An arrangement according to claim 18, **characterized** in that said filtering block (507) is arranged to implement a multitude of different filtering functions upon different coefficient groups within a single DCT coefficient matrix, wherein each filtering function is dependent on the contents of the coefficient group which is filtered.

**20.** An arrangement according to claim 14, **characterized** in that said means for reducing the number of bits used to represent said weighted and quantized DCT coefficient matrices comprise a requantization block (506) arranged to divide a DCT coefficient matrix by a certain second variable value.

**21.** An arrangement according to claim 14, **characterized** in that it comprises

- an input (501) and an output (504),
- a bitstream analyzer (502) coupled to said input (501), said bitstream analyzer having first, second, third and fourth data outputs and a control output,
- a multiplexer (503) coupled to said output (504), said multiplexer having first, second, third and fourth data inputs and a control input,
- an essentially direct connection from the control output of said bitstream analyzer (502) to the control input of said multiplexer (503),
- an essentially direct connection from the first data output of said bitstream analyzer (502) to the first data input of said multiplexer (503),
- between the second data output of said bitstream analyzer (502) and the second data input of said multiplexer (503) a series connection where a variable length decoder (505) is coupled to the second data output of said bitstream analyzer (502), a variable length re-encoder (508) is coupled to the second data input of said multiplexer (503), and between said variable length decoder (505) and said variable length re-encoder (508) there are a requantizing block (506) and a DCT filtering block (507) in any order, of which said variable length decoder (505), said variable length re-encoder (508) and said requantizing block (506) each comprise a control output,
- between the third data output of said bitstream analyzer (502) and the third data input of said multiplexer (503) an element-wise matrix multiplier block (509) having a control input which is coupled to the control output of said requantizing block (506) and
- between the fourth data output of said bitstream analyzer (502) and the fourth data input of said multiplexer (503) a virtual buffer verifier value modifier block (510) having first and second control inputs of which the first control input is coupled to the control output of said variable length decoder (505) and the second control input is coupled to the control output of said variable length re-encoder (508).

Fig. 1
PRIOR ART

EP 1 079 636 A1

Fig. 2
PRIOR ART

201 → BUFFER (202) → VLC DECODER (203) → INVERSE QUANTIZ. (204) → INVERSE DCT (205) → 206 → 207 → FRAME MEM 1 (208) / FRAME MEM 2 / FRAME MEM 3 (210) → 211 → 212

209

214

213 MOTION COMP.

MOTION VECTORS

401

Fig. 4
PRIOR ART

EP 1 079 636 A1

SEQUENCE LAYER

| VIDEO SEQUENCE |

GOP LAYER

| SEQ SC | SEQ HEADER | SEQ EXT. | GOP SC | GOP HEADER | PIC DATA | SEQ SC | SEQ HEADER | SEQ EXT. | GOP SC | GOP HEADER | PIC DATA | SEQ EC |

PICTURE LAYER

| PIC SC | PIC HEADER | PIC EXT. | I-PICT. DATA | PIC SC | PIC HEADER | PIC EXT. | P-PICT. DATA | PIC SC | PIC HEADER | PIC EXT. | C-PICT. DATA |

SLICE LAYER

| SLICE SC | SLICE HEADER | MACRO-BLOCK | MACRO-BLOCK | SLICE SC | SLICE HEADER | MACRO-BLOCK | MACRO-BLOCK | MACRO-BLOCK | MACRO-BLOCK |

MACROBLOCK LAYER

| MACROBL. ATTRIB. | MOTION VECTORS | BLOCK | BLOCK | BLOCK | BLOCK | BLOCK | BLOCK |

BLOCK LAYER

| DCT COEFF'S | BLOCK EC |

Fig. 3
PRIOR ART

15

EP 1 079 636 A1

MUX CONTROL

501 — | 502 BITSTREAM ANALYZER | UNTOUCHED | 503 MUX | — 504

DCT COEFF.

QUANTIZATION MATRICES

505 VLD → 506 REQUANT. → 507 ADAPTIVE DCT FILT. → 508 VLC

509 ELEMENTW. MATRIX MULT.

VIRTUAL BUFFER VERIFIER

VLD CONTROL          VLC CONTROL

510 VBV VALUE MODIFIER

Fig. 5

Fig. 6a

Fig. 6b

- ☐ DC
- ▨ VERTICAL
- ▧ HORIZONTAL
- ▩ DIAGONAL

GRAPHICAL IMAGE → 701 MAPPING INTO PIXELS → RAW IMAGE DATA → 702 INNER CODING → PARTLY CODED IMAGE DATA → 703 OUTER CODING → COMPLETELY CODED IMAGE DATA

704 OUTER DECODING → PARTLY CODED IMAGE DATA → 705 COMPRESSION → COMPRESSED PARTLY CODED IMAGE DATA → 706 OUTER CODING → COMPRESSED COMPLETELY CODED IMAGE DATA

707 OUTER DECODING → PARTLY CODED IMAGE DATA → 708 INNER DECODING → RAW IMAGE DATA → 709 DISPLAYING → GRAPHICAL IMAGE

Fig. 7

## EUROPEAN SEARCH REPORT

European Patent Office

Application Number

EP 00 11 6467

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| P,X | EP 0 944 261 A (MATSUSHITA ELECTRIC IND CO LTD) 22 September 1999 (1999-09-22) | 1-3,9, 11, 13-16,20 | H04N7/30 G06T9/00 H04N7/26 |
| P,A | * abstract * <br><br> * column 3, line 17 - line 44 * <br> * column 4, line 39 - column 8, line 29 * <br> * claims; figures 1-3,8,10 * | 4-8,10, 12, 17-19,21 | |
| X | WO 97 47128 A (BOCK ALOIS MARTIN ;NDS LTD (GB)) 11 December 1997 (1997-12-11) | 1-3,9, 11, 13-16,20 | |
| A | * page 1, last paragraph * <br><br> * claims 1,10; figures * | 4-8,10, 12, 17-19,21 | |
| X | EP 0 711 077 A (AT & T CORP) 8 May 1996 (1996-05-08) | 1-3,9, 11, 13-16,20 | |
| A | * the whole document * | 4-8,10, 12, 17-19,21 | TECHNICAL FIELDS SEARCHED (Int.Cl.7) <br><br> H04N G06T |
| A | WO 93 12613 A (AVID TECHNOLOGY INC) 24 June 1993 (1993-06-24) * abstract * * page 3, line 9 - line 24; claims * | 1-21 | |
| A | US 5 845 015 A (MARTUCCI STEPHEN ANTHONY) 1 December 1998 (1998-12-01) * the whole document * | 1-21 | |
| A | US 5 706 216 A (REISCH MICHAEL L) 6 January 1998 (1998-01-06) * the whole document * | 1-21 | |

The present search report has been drawn up for all claims

| Place of search | Date of completion of the search | Examiner |
|---|---|---|
| BERLIN | 28 September 2000 | Gries, T |

## ANNEX TO THE EUROPEAN SEARCH REPORT
## ON EUROPEAN PATENT APPLICATION NO.

EP 00 11 6467

This annex lists the patent family members relating to the patent documents cited in the above-mentioned European search report.
The members are as contained in the European Patent Office EDP file on
The European Patent Office is in no way liable for these particulars which are merely given for the purpose of information.

28-09-2000

| Patent document cited in search report | | Publication date | Patent family member(s) | | Publication date |
|---|---|---|---|---|---|
| EP 0944261 | A | 22-09-1999 | CN 1233134 A<br>JP 11331846 A | | 27-10-1999<br>30-11-1999 |
| WO 9747128 | A | 11-12-1997 | EP 0903041 A | | 24-03-1999 |
| EP 0711077 | A | 08-05-1996 | US 5687095 A<br>CA 2159846 A<br>JP 8242451 A | | 11-11-1997<br>02-05-1996<br>17-09-1996 |
| WO 9312613 | A | 24-06-1993 | AU 3274593 A<br>US 5577190 A<br>US 6023531 A | | 19-07-1993<br>19-11-1996<br>08-02-2000 |
| US 5845015 | A | 01-12-1998 | EP 0855119 A<br>JP 11511632 T<br>WO 9714252 A | | 29-07-1998<br>05-10-1999<br>17-04-1997 |
| US 5706216 | A | 06-01-1998 | DE 69609842 D<br>EP 0842586 A<br>JP 11510339 T<br>WO 9705748 A | | 21-09-2000<br>20-05-1998<br>07-09-1999<br>13-02-1997 |

EPO FORM P0459

For more details about this annex : see Official Journal of the European Patent Office, No. 12/82